# EUROPÄISCHE PATENTSCHRIFT

(11) **EP 1 966 479 B1**
(45) Veröffentlichungstag und Bekanntmachung des Hinweises auf die Patenterteilung: **23.03.2011**
(21) Anmeldenummer: 06807640.5
(22) Anmeldetag: 30.10.2006
(51) Int. Cl.: F02M 51/06, F02M 61/16, F02M 61/04, F16K 1/14

(54) **ELEKTROMAGNETISCH BETÄTIGBARES VENTIL**
ELECTROMAGNETICALLY OPERATED VALVE
SOUPAPE À ACTIONNEMENT ÉLECTROMAGNÉTIQUE

(30) Priorität: 22.12.2005 DE 102005061409
(43) Veröffentlichungstag der Anmeldung: 10.09.2008
(73) Patentinhaber: ROBERT BOSCH GMBH, 70442 Stuttgart (DE)
(72) Erfinder: REITER, Ferdinand, 71706 Markgroeningen (DE)
(86) Internationale Anmeldenummer: PCT/EP2006/067907
(87) Internationale Veröffentlichungsnummer: WO 2007/073961

(56) Entgegenhaltungen:
- EP-A2- 0 321 129
- EP-A2- 0 773 364
- WO-A-97/16641
- DE-A1- 19 503 224
- DE-A1- 19 537 382
- DE-A1- 19 712 590

## Beschreibung

### Stand der Technik

Die Erfindung geht aus von einem elektromagnetisch betätigbaren Ventil nach der Gattung des Hauptanspruchs.

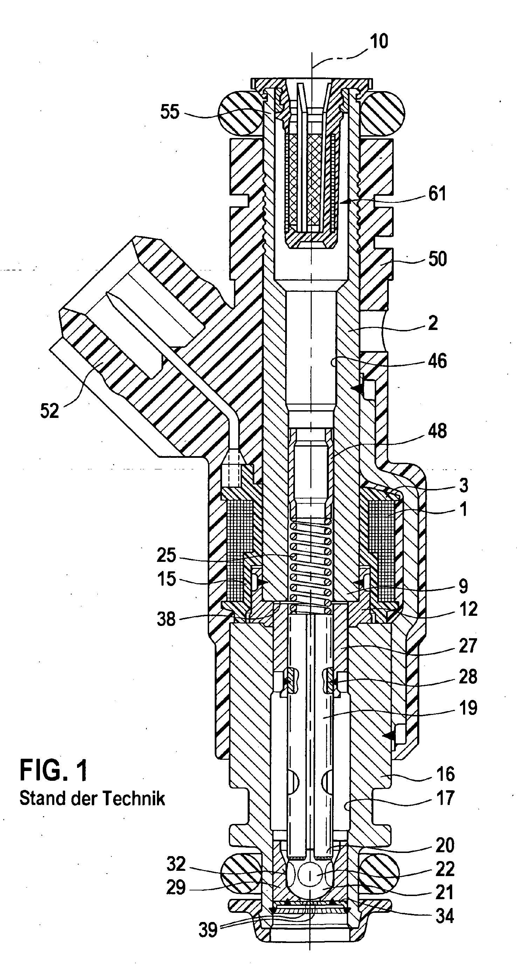

In der Figur 1 ist ein bekanntes Brennstoffeinspritzventil aus dem Stand der Technik dargestellt, das einen klassischen dreiteiligen Aufbau eines inneren metallenen Strömungsführungsteils und zugleich Gehäusebauteils besitzt. Dieses innere Ventilrohr wird aus einem einen Innenpol bildenden Einlassstutzen, einem nichtmagnetischen Zwischenteil und einem einen Ventilsitz aufnehmenden Ventilsitzträger gebildet. In dem Ventilsitzträger ist eine axial bewegbare Ventilnadel angeordnet, die einen Anker und einen kugelförmigen Ventilschließkörper sowie ein den Anker mit dem Ventilschließkörper verbindendes Verbindungsrohr umfasst. Die drei Einzelkomponenten der Ventilnadel sind mittels eines stoffschlüssigen Fügeverfahrens, insbesondere Schweißen, miteinander fest verbunden.

Aus der DE 40 08 675 A1 ist bereits ein solches elektromagnetisch betätigbares Ventil in Form eines Brennstoffeinspritzventils bekannt. Das innere Ventilrohr bildet das Grundgerüst des gesamten Einspritzventils und besitzt in seiner Gesamtheit aus den drei Einzelbauteilen eine wesentliche Stützfunktion. Das nichtmagnetische Zwischenteil ist durch Schweißnähte sowohl dicht und fest mit dem Einlassstutzen als auch mit dem Ventilsitzträger verbunden. Die Wicklungen einer Magnetspule sind in einem Spulenträger aus Kunststoff eingebracht, der wiederum in Umfangsrichtung einen Teil des als Innenpol dienenden Einlassstutzens und auch das Zwischenteil umgibt. In dem Ventilsitzträger ist eine axial bewegbare Ventilnadel angeordnet, die einen hülsenförmigen Anker und einen kugelförmigen Ventilschließkörper sowie ein den Anker mit dem Ventilschließkörper verbindendes Verbindungsrohr umfasst. Das Verbindungsrohr ist mittels Schweißnähten fest mit dem Anker und auch mit dem Ventilschließkörper verbunden.

Aus der DE 195 03 224 A1 ist ein weiteres elektromagnetisch betätigbares Ventil in der Form eines Brennstoffeinspritzventils bekannt. Das Brennstoffeinspritzventil besitzt einen mit einem Ventilsitz zusammenwirkenden kugelförmigen Ventilschließkörper, der an einem Schließkörperträger in Form eines Kunststoffrohres angebracht ist, während an dem dem Ventilschließkörper gegenüberliegenden Ende ein Anker an dem Kunststoffrohr befestigt ist. Zusammen bilden diese Bauteile eine axial bewegbare Ventilnadel. Das untere Ende des Kunststoffrohres ist kalottenförmig ausgebildet, wobei in der gewölbten Ausnehmung der Ventilschließkörper formschlüssig mittels einer Schnappverbindung festgehalten wird. Das Kunststoffrohr ist im Bereich der unteren Ausnehmung federelastisch ausgeführt, da Haltebacken den Ventilschließkörper umgreifen müssen. Um ein sicheres Festhalten des kugelförmigen Ventilschließkörpers zu gewährleisten, greifen die Haltebacken im montierten Zustand über den Äquator des Ventilschließkörpers hinweg, so dass der Öffnungsdurchmesser der Ausnehmung am Kunststoffrohr unterhalb des Äquators des Ventilschließkörpers kleiner ist als der Durchmesser des Ventilschließkörpers.

Aus der WO 97/16641 A ist bereits ein elektromagnetisch betätigbares Ventil in der Form eines Brennstoffeinspritzventils für Brennstoffeinspritzanlagen von Brennkraftmaschinen bekannt. Das Brennstoffeinspritzventil weist einen Magnetkreis mit einem Kern, mit einer Magnetspule, mit einem Anker, der einen mit einem festen Ventilsitz zusammenwirkenden Ventilschließkörper betätigt und bei erregter Magnetspule gegen den Kern gezogen wird, auf. Die Ventilnadel besitzt neben dem Anker einen rohrförmigen Schaft, der als Schließkörpetträger dient und an dem der Ventilschließkörper gehalten ist Der weitgehend kugelförmige Ventilschließkörper ist an dem Schließkörperträger kraftschlüssig aufgrund der Formgebung der korrespondierenden Verbindungsflächen festgehalten. Die Befestigung des Ventilschließkörpers am Schließkörperträger erfolgt dabei entweder mittels Crimpen/Bördeln, wobei es hierbei auch zu einem Formschluss kommt, mittels einer chemischen Behandlung (Kleben), so dass ein zusätzlicher Stoffschluss vorliegt, oder mittels einer Rast- bzw. Clipverbindung durch Eintauchen eines nasenartigen Vorsprungs am Schließkörperträger in eine umlaufende Nut am kugelförmigen Ventilschließkörper. In allen Fällen der Befestigungsmöglichkeiten liegen insofern zur kraftschlüssigen Verbindung noch zusätzliche Sicherungsmaßnahmen vor.

### Vorteile der Erfindung

Das erfindungsgemäße elektromagnetisch betätigbare Ventil mit den kennzeichnenden Merkmalen des Hauptanspruchs hat den Vorteil, dass eine vereinfachte und kostengünstige Herstellung und automatische Montage des Ventils und insbesondere der Ventilnadel realisierbar ist, da auf stoffschlüssige Fügeverfahren, wie Schweißen, die den Nachteil eines Wärmeverzugs besitzen, und aufwändige formschlüssige Verbindungstechniken verzichtet werden kann. Vielmehr wird erfindungsgemäss der Ventilschließkörper alleinig mittels einer kraftschlüssigen Verbindung durch geeignete Formgebung der korrespondierenden Verbindungsflächen und Materialwahl sicher und zuverlässig ohne Zusatzmittel an dem Verbindungsrohr bzw. dem Schließkörperträger der Ventilnadel gehalten.

Durch die in den Unteransprüchen aufgeführten Maßnahmen sind vorteilhafte Weiterbildungen und Verbesserungen des im Hauptanspruch angegebenen elektromagnetisch betätigbaren Ventils, insbesondere Brennstoffeinspritzventils möglich.

Besonders vorteilhaft ist es, einen Ventilschließkörper aus einem keramischen Werkstoff zu verwenden, wodurch die Masse der Ventilnadel reduziert werden kann. Zur weiteren Reduzierung der Masse der Ventilnadel kann auch der Schließkörperträger aus einem Kunststoff gefertigt sein. Aus der verringerten Masse der Ventilnadel ergeben sich die Vorteile einer besseren Dynamik des Ventils und einer verringerten Geräuschentwicklung.

Durch die einfache Herstellbarkeit der Ventilnadeln und insbesondere der Schließkörperträger als metallisches MIM-Teil oder aus Kunststoff lassen sich sehr einfach verschiedene Ventilnadellängen erzeugen.

Von Vorteil ist es zudem, dass durch einfache Maßnahmen eine Filterfunktion in dem Schließkörperträger integriert werden kann.

### Zeichnung

Ausführungsbeispiele der Erfindung sind in der Zeichnung vereinfacht dargestellt und in der nachfolgenden Beschreibung näher erläutert. Es zeigen Figur 1 ein Brennstoffeinspritzventil als Beispiel eines elektromagnetisch betätigbaren Ventils mit einer bekannten Ausführung einer Ventilnadel gemäß dem Stand der Technik, Figur 2 ein erstes Ausführungsbeispiel einer erfindungsgemäßen Ventilnadel in einer vergrößerten Darstellung und Figur 3 ein zweites Ausführungsbeispiel einer erfindungsgemäßen Ventilnadel in einer vergrößerten Darstellung.

### Beschreibung der Ausführungsbeispiele

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlassstutzen und Innenpol dienenden Kern 2, der beispielsweise hier rohrförmig ausgebildet ist und über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes nichtmagnetisches Zwischenteil 12 beispielsweise durch Schweißen verbunden und umgibt dabei das Kernende 9 teilweise axial. Der gestufte Spulenkörper 3 übergreift teilweise den Kern 2 und mit einer Stufe 15 größeren Durchmessers das Zwischenteil 12 zumindest teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 verläuft eine Längsbohrung 17, die konzentrisch zu der Ventillängsachse 10 ausgebildet ist. In der Längsbohrung 17 ist eine rohrförmige Ventilnadel 19 angeordnet, die an ihrem stromabwärtigen Ende 20 mit einem kugelförmigen Ventilschließkörper 21, an dessen Umfang beispielsweise fünf Abflachungen 22 zum Vorbeiströmen des Brennstoffs vorgesehen sind, beispielsweise durch Schweißen verbunden ist.

Die Betätigung des Einspritzventils erfolgt in bekannter Weise elektromagnetisch. Zur axialen Bewegung der Ventilnadel 19 und damit zum Öffnen entgegen der Federkraft einer Rückstellfeder 25 bzw. Schließen des Einspritzventils dient der elektromagnetische Kreis mit der Magnetspule 1, dem Kern 2 und einem Anker 27. Der Anker 27 ist mit dem dem Ventilschließkörper 21 abgewandten Ende der Ventilnadel 19 durch eine Schweißnaht 28 verbunden und auf den Kern 2 ausgerichtet. In das stromabwärts liegende, dem Kern 2 abgewandte Ende des Ventilsitzträgers 16 ist in der Längsbohrung 17 ein zylinderförmiger Ventilsitzkörper 29, der einen festen Ventilsitz aufweist, durch Schweißen dicht montiert.

Zur Führung des Ventilschließkörpers 21 während der Axialbewegung der Ventilnadel 19 mit dem Anker 27 entlang der Ventillängsachse 10 dient eine Führungsöffnung 32 des Ventilsitzkörpers 29. Der kugelförmige Ventilschließkörper 21 wirkt mit dem sich in Strömungsrichtung kegelstumpfförmig verjüngenden Ventilsitz des Ventilsitzkörpers 29 zusammen. An seiner dem Ventilschließkörper 21 abgewandten Stirnseite ist der Ventilsitzkörper 29 mit einer beispielsweise topfförmig ausgebildeten Spritzlochscheibe 34 konzentrisch und-fest verbunden. Im Bodenteil der Spritzlochscheibe 34 verläuft wenigstens eine, beispielsweise verlaufen vier durch Erodieren oder Stanzen ausgeformte Abspritzöffnungen 39.

Die Einschubtiefe des Ventilsitzkörpers 29 mit der topfförmigen Spritzlochscheibe 34 bestimmt die Voreinstellung des Hubs der Ventilnadel 19. Dabei ist die eine Endstellung der Ventilnadel 19 bei nicht erregter Magnetspule 1 durch die Anlage des Ventilschließkörpers 21 am Ventilsitz des Ventilsitzkörpers 29 festgelegt, während sich die andere Endstellung der Ventilnadel 19 bei erregter Magnetspule 1 durch die Anlage des Ankers 27 am Kernende 9 ergibt.

Eine in eine konzentrisch zur Ventillängsachse 10 verlaufende Strömungsbohrung 46 des Kerns 2 eingeschobene Einstellhülse 48, die beispielsweise aus gerolltem Federstahlblech ausgeformt ist, dient zur Einstellung der Federvorspannung der an der Einstellhülse 48 anliegenden Rückstellfeder 25, die sich wiederum mit ihrer gegenüberliegenden Seite an der Ventilnadel 19 abstützt. Das Einspritzventil ist weitgehend mit einer Kunststoffumspritzung 50 umschlossen. Zu dieser Kunststoffumspritzung 50 gehört beispielsweise ein mitangespritzter elektrischer Anschlussstecker 52. Ein Brennstofffilter 61 ragt in die Strömungsbohrung 46 des Kerns 2 an dessen zulaufseitigem Ende 55 hinein und sorgt für die Herausfiltrierung solcher Brennstoffbestandteile, die aufgrund ihrer Größe im Einspritzventil Verstopfungen oder Beschädigungen verursachen könnten.

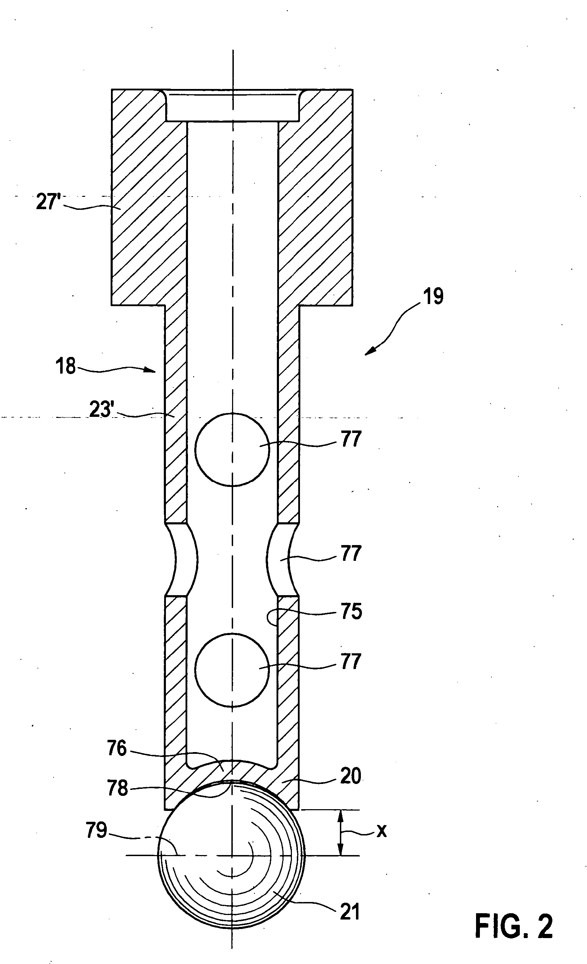

In der Figur 2 ist ein erstes Ausführungsbeispiel einer erfindungsgemäßen Ventilnadel 19 in einer vergrößerten Darstellung gezeigt. Die Ventilnadel 19 besteht bei dieser Ausführung aus zwei Einzelkomponenten, die zusammen das Bauteil Ventilnadel 19 bilden. Ein Schließkörperträger 18 bildet dabei eine erste Einzelkomponente, während ein kugelförmiger Ventilschließkörper 21 die zweite Einzelkomponente der Ventilnadel 19 darstellt. Der Schließkörperträger 18 umfasst wiederum zwei Abschnitte, einen durchmessergrößeren Ankerabschnitt 27' und einen durchmesserkleineren hülsenförmigen Verbindungsrohrabschnitt 23'. Der einteilige Schließkörperträger 18 ist z.B. mittels MIM-Verfahren (Metal Injection Molding) hergestellt und besitzt eine innere Längsöffnung 75, die an ihrem stromabwärtigen Ende durch einen quer verlaufenden Boden 76 verschlossen ist. Von der Längsöffnung 75 ausgehend verlaufen in der Wandung des Verbindungsrohrabschnitts 23' mehrere Queröffnungen 77, die von innen nach außen in Richtung zum Ventilsitz von Brennstoff durchströmt werden. Auf seiner der inneren Längsöffnung 75 gegenüberliegenden Seite ist der Boden 76 mit einer geeigneten Konturgebung zur Aufnahme des Ventilschließkörpers 21 versehen. Im Boden 76 ist dazu eine gewölbte bzw. kalottenförmige Ausnehmung 78 vorgesehen.

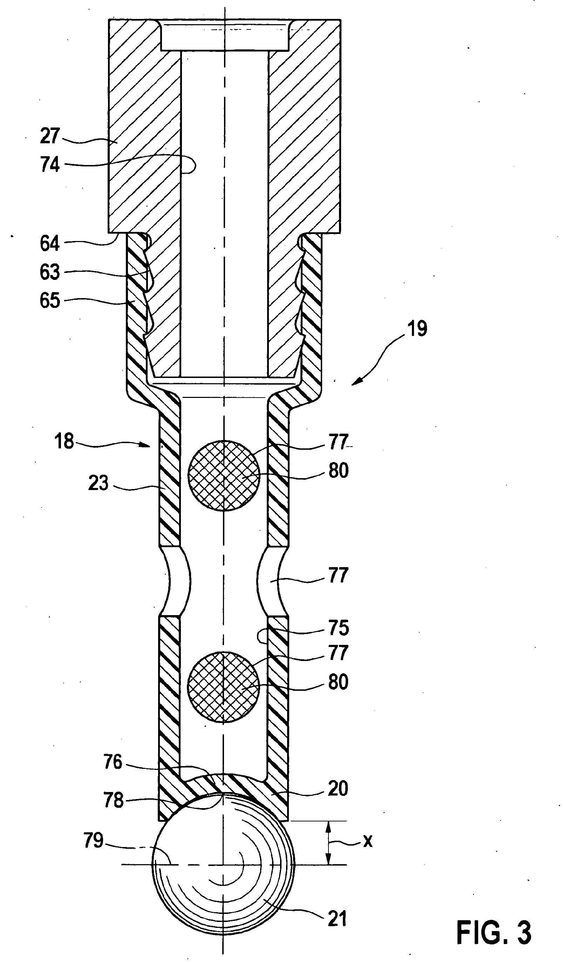

Durch eine entsprechende Werkzeuggestaltung kann die Form der Ausnehmung 78 sehr genau hergestellt werden. Die gewölbte Aufnahmefläche der Ausnehmung 78 weist einen geringfügig kleineren Durchmesser auf als den Durchmesser des kugelförmigen Ventilschließkörpers 21, wodurch nach dem Anbringen des Ventilschließkörpers 21 unter Aufbringung einer geringen Kontaktkraft eine kraftschlüssige Verbindung zwischen dem Schließkörperträger 18 und dem Ventilschließkörper 21 entsteht, ohne dass zusätzliche Hilfsmittel nötig wären. Insbesondere unter Einwirkung von Brennstoff erfährt die kraftschlüssige Verbindung eine weitere Verbesserung ihrer Qualität. Die. Haftkraft des Ventilschließkörpers 21 am Schließkörperträger 18 ist bei der erfindungsgemäßen Anordnung ausreichend groß, um den Ventilschließkörper 21 über den Schließkörperträger 18 beim Bestromen der Magnetspule 1 sicher, zuverlässig und reproduzierbar aus dem Ventilsitz des Ventilsitzkörpers 29 zu ziehen, obwohl der Ventilschließkörper 21 "lose" an dem Schließkörperträger 18 gehalten wird. Die Ausnehmung 78 am Schließkörperträger 18 ist so ausgeführt, dass sie den Ventilschließkörper 21 nur über einen Kugelabschnitt umgreift, der oberhalb des Äquators 79 mit einem Abstandsmaß x zu diesem endet. Das Abstandsmaß x ist dabei in den Figuren 2 und 3 gegenüber einer praktikablen Ausführung übertrieben groß dargestellt, um es überhaupt zu verdeutlichen. Der Ventilschließkörper 21 ist z.B. als Vollkugel in höchster Qualität ausgeführt, so dass sehr gute Dichtheitsergebnisse erzielbar sind. Vorzugsweise wird als Material für den Ventilschließkörper 21 ein keramischer Werkstoff, z.B. Si₃N₄ verwendet. Ein solcher Werkstoff besitzt nur ca. 1/3 der Masse eines vergleichbar großen Ventilschließkörpers aus Stahl, wie er üblicherweise verwendet wird. Die erfindungsgemäße Art der Befestigung des Ventilschließkörpers 21 erlaubt jedoch eine völlige Freiheit in der Wahl des Werkstoffs für den Ventilschließkörper 21, der metallisch oder keramisch oder ein Kunststoff sein kann.

In der Figur 3 ist ein zweites Ausführungsbeispiel einer erfindungsgemäßen Ventilnadel 19 in einer vergrößerten Darstellung gezeigt. Die Ventilnadel 19 besteht bei dieser Ausführung aus drei Einzelkomponenten, die zusammen das Bauteil Ventilnadel 19 bilden. Der Anker 27, der z.B. als Drehteil ausgebildet ist, bildet dabei eine erste Einzelkomponente, während ein kugelförmiger Ventilschließkörper 21 eine zweite Einzelkomponente der Ventilnadel 19 darstellt. Ein den Anker 27 mit dem Ventilschließkörper 21 verbindendes Verbindungsrohr 23 stellt den Schließkörperträger 18 dar. Das Verbindungsrohr 23 ist z.B. mittels Kunststoffspritzgießen hergestellt und besitzt eine innere Längsöffnung 75, die an ihrem stromabwärtigen Ende durch einen quer verlaufenden Boden 76 verschlossen ist. Im Anker 27 ist ebenfalls eine Längsöffnung 74 vorgesehen, deren Durchmesser weitgehend dem Durchmesser der Längsöffnung 75 im Verbindungsrohr 23 entspricht.

Am dem Ventilschließkörper 21 zugewandten unteren Ende weist der Anker 27 eine sägezahnähnliche Struktur 63 mit einem "Tannenbaumprofil" auf. Diese Struktur 63 korrespondiert mit einem oberen aufgeweiteten Ende 65 des Verbindungsrohres 23 aus Kunststoff. Zur Herstellung einer festen Verbindung zwischen dem Anker 27 und dem Verbindungsrohr 23 wird der Anker 27 mit seiner Struktur 63 in das Verbindungsrohr 23 eingepresst, und zwar in der Weise, dass sich die Struktur 63 fest, sicher und z.B. verdrehfixiert am Ende 65 des Verbindungsrohrs 23 verhakt und verspreizt. Die Struktur 63 dringt dabei in den Kunststoff des Verbindungsrohrs 23 ein, und der Kunststoff relaxiert nachfolgend. Durch einen Ringabsatz 64 am Anker 27 kann die Einpresstiefe des Ankers 27 in das Verbindungsrohr 23 exakt festgelegt werden. Von der Längsöffnung 75 ausgehend verlaufen in der Wandung des Verbindungsrohrs 23 mehrere Queröffnungen 77, die von innen nach außen in Richtung zum Ventilsitz von Brennstoff durchströmt werden. Die Queröffnungen 77 können optional mit einem Siebgewebe 80 aus Kunststoff oder Metall versehen sein, das im Spritzgussprozess des Verbindungsrohrs 23 als Einlegeteil mit angebracht wird. Auf seiner der inneren Längsöffnung 75 gegenüberliegenden Seite ist der Boden 76 mit einer geeigneten Konturgebung zur Aufnahme des Ventilschließkörpers 21 versehen. Im Boden 76 ist dazu eine gewölbte bzw. kalottenförmige Ausnehmung 78 vorgesehen.

Auch bei dieser Ausführung kann durch eine entsprechende Werkzeuggestaltung die Form der Ausnehmung 78 sehr genau hergestellt werden. Die gewölbte Aufnahmefläche der Ausnehmung 78 weist einen geringfügig kleineren Durchmesser auf als den Durchmesser des kugelförmigen Ventilschließkörpers 21, wodurch nach dem Anbringen des Ventilschließkörpers 21 unter Aufbringung einer geringen Kontaktkraft eine kraftschlüssige Verbindung zwischen dem Schließkörperträger 18 und dem Ventilschließkörper 21 entsteht. Der Ventilschließkörper 21 wird über den Schließkörperträger 18 beim Bestromen der Magnetspule 1 sicher, zuverlässig und reproduzierbar aus dem Ventilsitz des Ventilsitzkörpers 29 gezogen, obwohl der Ventilschließkörper 21 "lose" an dem Schließkörperträger 18 gehalten wird. Als Material für den als Vollkugel ausgebildeten Ventilschließkörper 21 bietet sich ein keramischer Werkstoff, z.B. Si₃N₄ an. Die erfindungsgemäße Art der Befestigung des Ventilschließkörpers 21 erlaubt jedoch eine völlige Freiheit in der Wahl des Werkstoffs für den Ventilschließkörper 21, der metallisch oder keramisch oder ein Kunststoff sein kann.

Die Erfindung ist nicht auf eine Anwendung bei einem Brennstoffeinspritzventil beschränkt, sondern bei verschiedenen Typen von elektromagnetisch betätigbaren Ventilen einsetzbar, bei denen Ventilnadeln mit kugelförmigen Ventilschließkörpern zum Einsatz kommen.

## Patentansprüche

1. Elektromagnetisch betätigbares Ventil, insbesondere Brennstoffeinspritzventil für Brennstoffeinspritzanlagen von Brennkraftmaschinen, mit einer Ventillängsachse (10), mit einem Kern (2), mit einer Magnetspule (1), mit einem Anker (27, 27'), der einen mit einem festen Ventilsitz zusammenwirkenden Ventilschließkörper (21) betätigt und bei erregter Magnetspule (1) gegen den Kern (2) gezogen wird, und mit einem Schließkörperträger (18), an dem der Ventilschließkörper (21) gehalten ist, wobei der Ventilschließkörper (21) an dem Schließkörperträger (18) kraftschlüssig aufgrund der Formgebung der korrespondierenden Verbindungsflächen festgehalten ist,
**dadurch gekennzeichnet, dass** der Ventilschließkörper (21) kugelförmig, insbesondere als Vollkugel, ausgeführt ist und in einer gewölbten bzw. kalottenförmigen Ausnehmung (78) des Schließkörperträgers (18) gehalten ist wobei der kugelförmige Ventilschließkörper (21) einen geringfügig größeren Durchmesser aufweist als den Durchmesser der Ausnehmung (78) des Schließkörperträgers (18) und die Ausnehmung (78) am Schließkörperträger (18) so aufgeführt ist, dass sie den Ventilschließkörper (21) nur über einen Kugelabschnitt umgreift, der oberhalb des Äquators (79) mit einem Abstandsmaß (x) zu diesem endet.

2. Ventil nach Anspruch 1,
**dadurch gekennzeichnet, dass** der Vendlschließkörper (21) aus einem keramischen Werkstoff, insbesondere Si₃N₁ besteht.

3. Ventil nach einem der vorhergehenden Ansprüche,
**dadurch gekennzeichnet, dass** der Schließkörperträger (18) als Teil einer Ventilnadel (19) eine einteilige Einzelkomponente bestehend aus einem Ankerabschnitt (27') und einem Verbindungsrohrabschnitt (23') darstellt.

4. Ventil nach Anspruch 3,
**dadurch gekennzeichnet, dass** der Schließkörperträger (18) mittels MIM-Verfahren herstellbar ist.

5. Ventil nach Anspruch 1 oder 2,
**dadurch gekennzeichnet, dass** der Schließkörperträger (18) als Teil einer Ventilnadel (19) eine Einzelkomponente in Form eines Verbindungsrohrs (23) darstellt, wobei das Verbindungsrohr (23) den Anker (27) mit dem Ventilschließkörper (21) verbindet.

6. Ventil nach Anspruch 5,
**dadurch gekennzeichnet, dass** das Verbindungsrohr (23) aus einem Kunststoff und der Anker (27) aus einem metallischen Werkstoff bestehen.

7. Ventil nach Anspruch 6,
**dadurch gekennzeichnet, dass** an dem Anker (27) eine sägezahnähnliche Struktur (63) vorgesehen ist, die zur Herstellung einer festen Verbindung mit dem Verbindungsrohr (23) in das Verbindungsrohr (23) eingepresst ist

8. Ventil nach einem der vorhergehenden Ansprüche,
**dadurch gekennzeichnet, dass** im Schließkörperträger (18) ein Siebgewebe (80) mit angebracht ist.

9. Ventil nach einem der vorhergehenden Ansprüche,
**dadurch gekennzeichnet, dass** der Ventilschließkörper (21) lose und zusatzmittelfrei an dem Schließkörperträger (18) gehalten ist.

## Claims

1. Electromagnetically actuable valve, in particular fuel injection valve for fuel injection systems of internal combustion engines, having a valve longitudinal axis (10), having a core (2), having a magnet coil (1), having an armature (27, 27'), which armature actuates a valve closing body (21) which interacts with a fixed valve seat and which armature is pulled against the core (2) when the magnet coil (1) is excited, and having a closing body support (18) on which the valve closing body (21) is held, with the valve closing body (21) being fixedly held on the closing body support (18) in a frictionally engaging manner on account of the shaping of the corresponding connecting surfaces,
**characterized in that** the valve closing body (21) is spherical, in particular is formed as a solid ball, and is held in an arched or spherical-segment-shaped recess (78) of the closing body support (18), with the spherical valve closing body (21) having a slightly larger diameter than the diameter of the recess (78) of the closing body support (18), and with the recess (78) on the closing body support (18) being designed so as to engage around the valve closing body (21) only over a ball section which ends above the equator (79) at a distance (x) therefrom.

2. Valve according to Claim 1,
**characterized in that** the valve closing body (21) is composed of a ceramic material, in particular Si₃N₄.

3. Valve according to one of the preceding claims,
**characterized in that** the closing body support (18), as part of a valve needle (19), is a single-piece individual component composed of an armature section (27') and a connecting tube section (23').

4. Valve according to Claim 3,
**characterized in that** the closing body support (18) can be produced by means of MIM processes.

5. Valve according to Claim 1 or 2, **characterized in that** the closing body support (18), as part of a valve needle (19), is an individual component in the form of a connecting tube (23), with the connecting tube (23) connecting the armature (27) to the valve closing body (21).

6. Valve according to Claim 5,
**characterized in that** the connecting tube (23) is composed of a plastic and the armature (27) is composed of a metallic material.

7. Valve according to Claim 6,
**characterized in that** a sawtooth-shaped structure (63) is provided on the armature (27), which sawtooth-shaped structure is pressed into the connecting tube (23) in order to produce a fixed connection to the connecting tube (23).

8. Valve according to one of the preceding claims,
**characterized in that** a screen fabric (80) is jointly attached in the closing body support (18).

9. Valve according to one of the preceding claims,
**characterized in that** the valve closing body (21) is held on the closing body support (18) loosely and without additional means.

## Revendications

1. Soupape à commande électromagnétique, notamment soupape d'injection de carburant pour installations d'injection de carburant de moteurs à combustion interne, comprenant un axe longitudinal de soupape (10), un noyau (2), une bobine magnétique (1), une armature (27, 27'), qui actionne un corps de fermeture de soupape (21) coopérant avec un siège de soupape fixe et qui, lorsque la bobine magnétique (1) est excitée, est attiré contre le noyau (2), et un support de corps de fermeture (18), sur lequel est maintenu le corps de fermeture de soupape (21), le corps de fermeture de soupape (21) étant fixé sur le support de corps de fermeture (18) par engagement par force du fait de la forme des surfaces de connexion correspondantes,
**caractérisée en ce que** le corps de fermeture de soupape (21) est réalisé sous forme sphérique, notamment sous forme de sphère pleine, et est maintenu dans un évidement courbe ou en forme de calotte (78) du support de corps de fermeture (18), le corps de fermeture de soupape de forme sphérique (21) présentant un diamètre légèrement plus grand que le diamètre de l'évidement (78) du support de corps de fermeture (18) et l'évidement (78) sur le support de corps de fermeture (18) étant réalisé de telle sorte qu'il ne vienne en prise autour du corps de fermeture de soupape (21) que sur une portion sphérique qui se termine au-dessus de l'équateur (79) à une distance (x) de celui-ci.

2. Soupape selon la revendication 1,
**caractérisée en ce que** le corps de fermeture de soupape (21) se compose d'un matériau céramique, notamment de Si₃N₁.

3. Soupape selon l'une quelconque des revendications précédentes,
**caractérisée en ce que** le support de corps de fermeture (18), en tant que partie d'une aiguille de soupape (19), constitue un composant individuel d'une seule pièce constitué d'une portion d'armature (27') et d'une portion de tube de connexion (23').

4. Soupape selon la revendication 3,
**caractérisée en ce que** le support de corps de fermeture (18) peut être fabriqué par un procédé MIM.

5. Soupape selon la revendication 1 ou 2,
**caractérisée en ce que** le support de corps de fermeture (18), en tant que partie d'une aiguille de soupape (19), constitue un composant individuel sous forme de tube de connexion (23), le tube de connexion (23) reliant l'armature (27) au corps de fermeture de soupape (21).

6. Soupape selon la revendication 5,
**caractérisée en ce que** le tube de connexion (23) se compose d'un plastique et l'armature (27) d'un matériau métallique.

7. Soupape selon la revendication 6,
**caractérisée en ce qu'**une structure (63) en dents de scie est prévue sur l'armature (27), laquelle est pressée dans le tube de connexion (23) pour établir une connexion fixe avec le tube de connexion (23).

8. Soupape selon l'une quelconque des revendications précédentes,
**caractérisée en ce qu'**une toile de criblage (80) est montée conjointement dans le support de corps de fermeture (18).

9. Soupape selon l'une quelconque des revendications précédentes, **caractérisée en ce que** le corps de fermeture de soupape (21) est maintenu lâchement et sans moyen supplémentaire sur le support de corps de fermeture (18).
